# EUROPEAN PATENT APPLICATION

(11) **EP 3 553 556 A1**
(43) Date of publication of application: **16.10.2019**
(21) Application number: 19167983.6
(22) Date of filing: 08.04.2019
(51) Int. Cl.: G01S 13/28, G01S 17/89, G01S 7/484, G01S 17/42

(54) **LIGHT MODULATING LIDAR APPARATUS**

(30) Priority: 09.04.2018 US 201815948091
(71) Applicant: Visteon Global Technologies, Inc., Van Buren Township, MI 48111-5711 (US)
(72) Inventor: WILMER, Thorsten, 76646 Bruchsal (DE); NGUYEN, Giang-Nam, 76227 Karlsruhe (DE); SCHULZE, Matthias, 75417 Mühlacker (DE)
(74) Representative: Dummett Copp LLP

(57) **Abstract**

A LIDAR apparatus (20) includes a laser source (22) generating a first beam (24) of laser light and an imaging device (28) generating an image signal (32) of a pattern of points (26) overlaid upon an image (34) of one or more objects (36). A controller (38) includes an object detection module (40) receiving the image signal and determining if the object is a protected object (36'), such as a person susceptible to vision impairment from exposure to laser light. A laser intensity module (42) provides an intensity control signal to the laser source and causes the laser source to vary the intensity of the laser light directed toward each of the protected objects. A spatial light modulator (SLM) (44) may modulate the first beam (24) to project the pattern of points. An SLM control module (46) varies the intensity of the laser light by providing the SLM with an intensity control signal (43) describing one or more low intensity regions (48) corresponding to each of the protected objects (36').

## Description

### BACKGROUND

LIDAR, which stands for Light Detection and Ranging, is a remote sensing method that uses laser light to measure distance to a target object by illuminating the target object with laser light and measuring the reflected light with a sensor. LIDAR systems work on the same general principles of radar, but use laser light instead of radio frequency radiation. LIDAR systems generally use pulsed laser to measure distances. Differences in laser return times and wavelengths can then be used to make digital 3-D representations of the target. LIDAR systems have a variety of applications including cartography, surveying, and in vehicular applications as an information source that can provide useful data for augmented or autonomous driving systems. Traditional LIDAR systems are limited by the laser intensity required to be "eye safe" such that the laser light projected is not sufficient to cause vision damage.

### SUMMARY

A LIDAR apparatus is provided which includes a laser source generating a first beam of laser light. The LIDAR apparatus also includes an imaging device having a field of view and generating an image signal representing an object within the field of view. An object detection module is in communication with the imaging device to receive the image signal and to determine if the object is a protected object matching the characteristics of an object susceptible to vision impairment from exposure to laser light. The LIDAR apparatus is configured to reduce the intensity of the laser light directed toward the protected object.

A LIDAR apparatus is also provided which includes a laser source generating a first beam of laser light. The LIDAR apparatus also includes an imaging device generating an image signal representing an object. The laser light is projected upon the object as a pattern of points. An object detection module is in communication with the imaging device to process the image signal. The pattern of points projected upon the object has a reduced intensity in response to the object detection module determining that the object is a protected object matching the characteristics of an object susceptible to vision impairment from exposure to laser light

A method for operating a LIDAR apparatus is also provided. The method includes the steps of: generating a first beam of laser light by a laser source; generating by an imaging device, an image signal of an image of an object within a field of view. The method proceeds with identifying, by an object detection module, the object as a protected object which is susceptible to vision impairment from exposure to laser light; and reducing the intensity of the laser light projected toward the protected object.

### BRIEF DESCRIPTION OF THE DRAWINGS

Further details, features and advantages of designs of the invention result from the following description of embodiment examples in reference to the associated drawings.
FIG. 1 is a block diagram showing an embodiment of a LIDAR apparatus;
FIG. 2 is a block diagram showing another embodiment of a LIDAR apparatus;
FIG. 3 is a diagram of a pattern of points of a LIDAR apparatus;
FIG. 4 is a block diagram of a controller for a LIDAR apparatus;
FIG. 5A is a flow chart of a method for operating a LIDAR apparatus;
FIG. 5B is a flow chart of additional steps in the method shown on FIG. 5A;
FIG. 5C is a flow chart of additional steps in the method shown on FIG. 5A; and
FIG. 5D is a flow chart of additional steps in the method shown on FIG. 5A.

### DETAILED DESCRIPTION

Recurring features are marked with identical reference numerals in the figures. A LIDAR apparatus 20 is disclosed. The subject LIDAR apparatus 20 may be used, for example, in a vehicle to provide low-light vision and/or object identification capabilities for a person and/or an autonomous or augmented driving system.

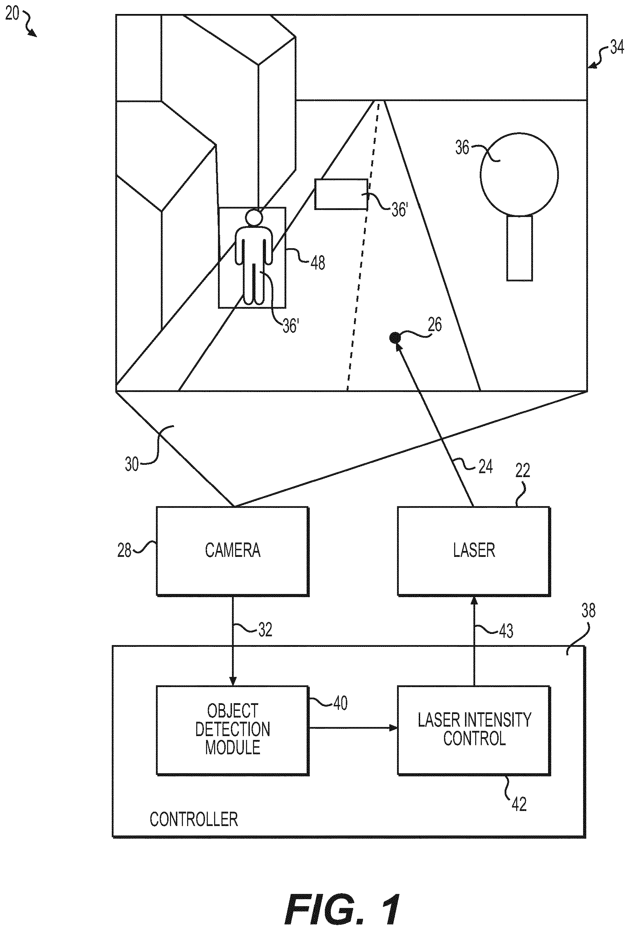

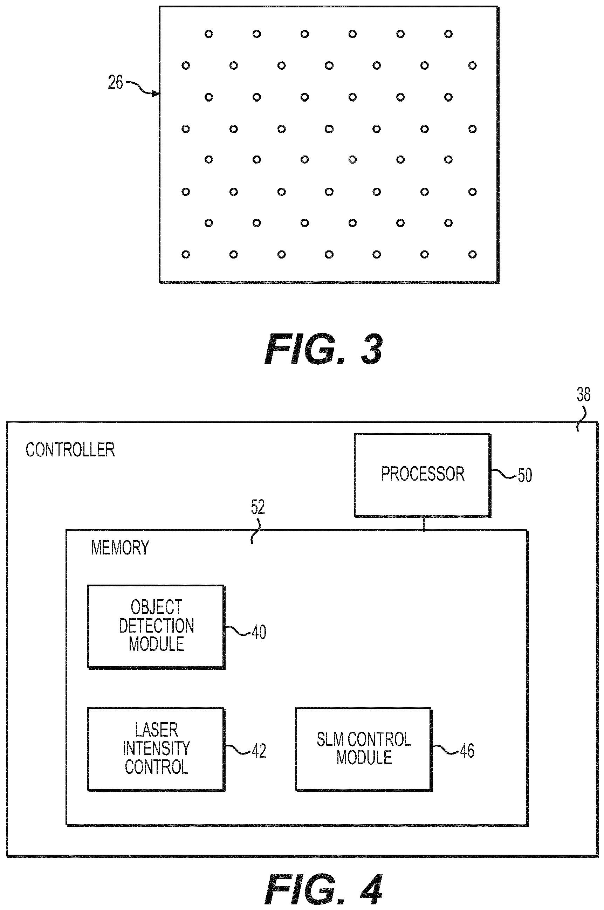

As shown in the block diagram FIG. 1, an example embodiment of the LIDAR apparatus 20 includes a laser source 22 generating a first beam 24 of laser light. The laser source 22 may use a solid, gas, liquid, or semiconductor laser medium and is preferably a semiconductor or diode type, which is capable of rapid pulsation. The laser light is projected from the LIDAR apparatus 20 as a pattern of points 26 of relatively high intensity separated from one another by regions of relatively low intensity. Many different patterns of points 26 may be used, and the patterns of points 26 may be changed during operation of the LIDAR apparatus 20. An example of one such pattern of points 26 is shown in FIG. 3.

The LIDAR apparatus 20 also includes an imaging device 28 having a field of view 30 and generating an image signal 32 of the pattern of points 26 overlaid upon an image 34 of one or more objects 36 within the field of view 30. In other words, the image signal 32 includes a data representation of the objects 36 within the field of view 30. The imaging device 28 may be a video or still camera, and may operate in visual or IR light wavelengths. The imaging device 28 may use other types of devices including but not limited to LIDAR, or RADAR.

The LIDAR apparatus 20 also includes a controller 38 including an object detection module 40 in communication with the imaging device 28 to receive and to process the image signal 32 and to detect the position and distance of the one or more objects 36 using the image signal 32 and to determine if the object 36 is a protected object 36' matching the characteristics of an object 36 which is susceptible to vision impairment from exposure to laser light. Examples of such protected objects 36' include pedestrians, cyclists, and vehicles occupied or likely to be occupied by one or more people. The object detection module 40 may include one or more machine vision modules such as, for example, a convolutional neural network in order to recognize and to identify the objects 36.

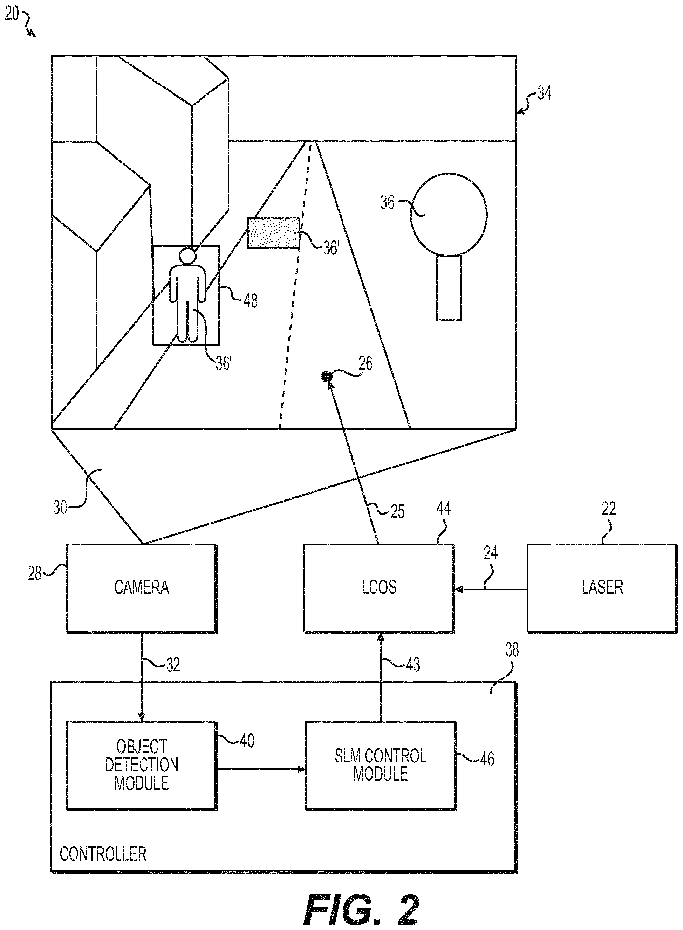

As illustrated in FIGS. 1 and 2, objects 36 which are identified as being a pedestrian, or a vehicle are classified as protected objects 36' which should be protected from potentially harmful laser intensity levels. Other objects 36, such as a tree or a road sign are not protected objects 36' and can, therefore, be subjected to a greater laser intensity. The controller 38 reduces the intensity of the pattern of points 26 directed toward each of the protected objects 36'. In other words, laser light having a reduced intensity is directed toward each of the protected objects 36'. Therefore, higher intensity laser light can be projected to other areas away from the protected objects 36', which can allow a LIDAR apparatus 20 to have enhanced performance over systems of the prior art. This enhanced performance can provide for a greater range and greater resolution.

In a first embodiment shown in FIG. 1, the LIDAR apparatus 20 includes a laser intensity module 42 in communication with both the laser source 22 and the object detection module 40. The laser intensity module 42 provides an intensity control signal 43 to the laser source 22, causing the laser source 22 to vary the intensity of the laser light produced and to thereby reduce the intensity of the pattern of points 26 directed toward each of the protected objects 36'.

In a second embodiment shown in FIG. 2, the LIDAR apparatus 20 includes a spatial light modulator 44 (SLM) configured to modulate the first beam 24 to project a second beam 25 having the pattern of points 26. The spatial light modulator 44 may be a liquid crystal on silicon (LCOS) device. Different types of devices may also be used for the spatial light modulator 44 which may include diffractive optical elements and liquid crystal displays.

The LIDAR apparatus 20 of the second embodiment also includes an SLM control module 46 in communication with the object detection module 40 and with the spatial light modulator 44. The SLM control module 46 is configured to vary the intensity of the laser light by providing an intensity control signal 43 describing one or more low intensity regions 48 corresponding to each of the protected objects 36'. The SLM control module 46 may generate the pattern of points 26. Alternatively, the pattern of points 26 may be generated separately from the SLM control module. For example, the spatial light modulator 44 may be preconfigured to generate one or more different patterns of points 26.

According to a further aspect, the object detection module 40 is configured to determine a vision damage risk associated with each of the protected objects 36' based upon one or more risk factors. The risk factors may include the type of the protected object 36', such as whether the protected object 36' is a pedestrian, or a cyclist, or a vehicle. The risk factors may also include the distance to the protected object 36', and/or the orientation of the protected object 36', such as whether the protected object 36' is facing or moving toward or away from the LIDAR apparatus 20. The vision damage risk may be, for example, a numeric score that combines each of the risk factors. The LIDAR apparatus 20 may be configured to reduce the intensity of the pattern of points 26 toward a given one of the protected objects 36' by an amount corresponding to the vision damage risk of the given one of the protected objects 36'. For example, a nearby stationary pedestrian may have a higher vision damage risk than a distant vehicle moving away from the LIDAR apparatus 20, so the LIDAR apparatus may be configured to project laser light having a lower intensity toward that nearby pedestrian than the laser light projected toward the more distant vehicle.

According to a further aspect, the object detection module 40 may use a location and amplitude of one or more of the points of relatively high intensity within the pattern of points 26 relative to adjacent regions within the image signal 32 in detecting the position and distance of the one or more objects 36.

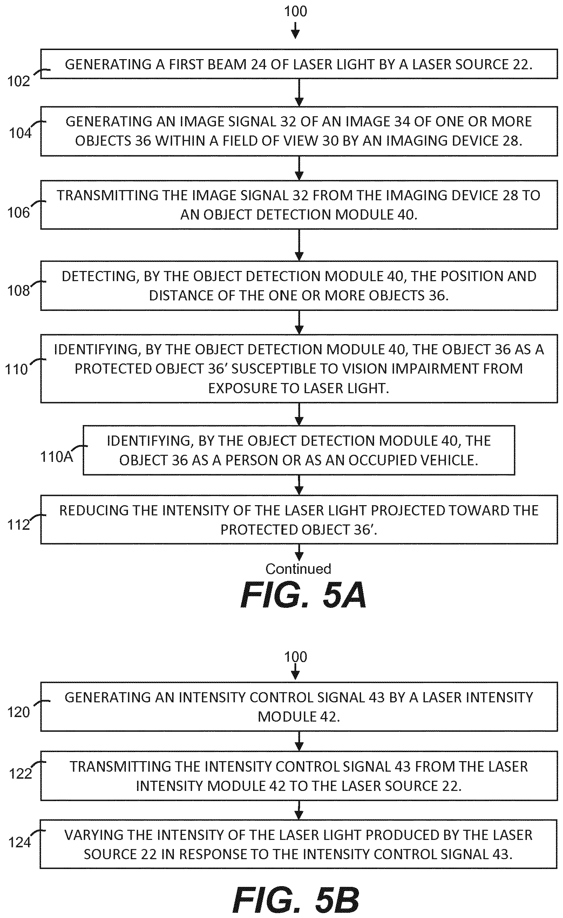

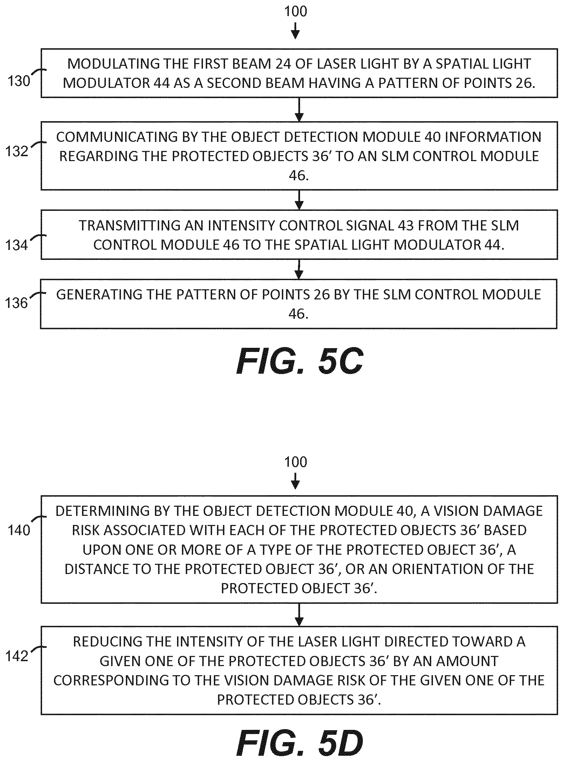

As illustrated in the flow charts of FIGS. 5A - 5D, a method 100 for operating a LIDAR apparatus 20 is also provided. The method 100 includes the steps of 102 generating a first beam 24 of laser light by a laser source 22.

The method 100 also includes 104 generating an image signal 32 of an image 34 of one or more objects 36 within a field of view 30 by an imaging device 28. The image signal 32 may include one or more digital or analog signals, and may take the form of a data stream or packetized data.

The method 100 also includes 106 transmitting the image signal 32 from the imaging device 28 to an object detection module 40. This transmission may be wired, wireless, or via other methods such as shared memory, for example, where the imaging device 28 and the object detection module 40 are modules within the same controller 38.

The method 100 also includes 108 detecting, by the object detection module 40, the position and distance of the one or more objects 36. The object detection module 40 may, for example, use frequency and/or timing fluctuations of the laser light reflecting from the one or more objects 36 to determine the position and distance thereof.

The method 100 also includes 110 identifying, by the object detection module 40, the object 36 as a protected object 36' susceptible to vision impairment from exposure to laser light. Step 110 of identifying the object 36 as a protected object 36' may further include 110A identifying, by the object detection module 40, the object 36 as a person or as an occupied vehicle. A vehicle may be identified as an occupied vehicle, or one that is likely to be occupied based on the location and/or movement of the vehicle. A vehicle may also be identified as an occupied vehicle based on actually seeing one or more people within the vehicle, or the vehicle having other characteristics of being occupied, such as having its lights on.

The method 100 also includes 112 reducing the intensity of the laser light projected toward the protected object 36'. In other words, a baseline intensity may be used for the laser light, and the light projected in the direction of the protected object 36' may be reduced to an intensity that is less than that baseline intensity.

According to an aspect the method 100 may further include 120 generating an intensity control signal 43 by a laser intensity module 42. This method step corresponds to the embodiment of the LIDAR apparatus 20 shown in FIG. 1.

The method 100 may also include 122 transmitting the intensity control signal 43 from the laser intensity module 42 to the laser source 22. This transmission may be wired, wireless, or via other methods such as shared memory or control of a source of power to the laser source 22, for example, where the laser intensity module 42 and the laser source 22 are integrated within the same device.

The method 100 may also include 124 varying the intensity of the laser light produced by the laser source 22 in response to the intensity control signal 43. The laser light produced by the laser source 22 may be varied in intensity, for example, by using a lower level power input or by being active for a shorter period of time in response to the intensity control signal 43. The intensity control signal 43 may use pulse width modulation (PWM) and/or other means of signalling a corresponding intensity value for the laser light.

According to an aspect the method 100 may further include 130 modulating the first beam 24 of laser light by a spatial light modulator 44 as a second beam having a pattern of points 26. This method step corresponds to the embodiment of the LIDAR apparatus 20 shown in FIG. 2.

The method 100 may also include 132 communicating by the object detection module 40 information regarding the protected objects 36'to an SLM control module 46.

The method 100 may also include 134 transmitting an intensity control signal 43 from the SLM control module 46 to the spatial light modulator 44. This transmission may be wired, wireless, or via other methods such as shared memory, for example, where the SLM control module 46 and the spatial light modulator 44 are implemented within the same physical device.

The method 100 may further include 136 generating the pattern of points 26 by the SLM control module 46. The SLM control module 46 may determine the pattern of points 26, which may include the points that are directed to the protected objects 36' having a lower intensity or a lower density to provide a lower overall laser intensity toward the protected objects 36'.

According to another aspect the method 100 may include 140 determining by the object detection module 40, a vision damage risk associated with each of the protected objects 36' based upon one or more of a type of the protected object 36', a distance to the protected object 36', or an orientation of the protected object 36'. The vision damage risk may be quantified, for example, as a score. For example, an unprotected pedestrian nearby and facing toward the near the LIDAR apparatus may have a relatively high vision damage risk, while a distant vehicle moving away from the LIDAR apparatus may have a relatively low vision damage risk.

The method 100 may further include 142 reducing the intensity of the laser light directed toward a given one of the protected objects 36' by an amount corresponding to the vision damage risk of the given one of the protected objects 36'.

The system, methods and/or processes described above, and steps thereof, may be realized in hardware, software or any combination of hardware and software suitable for a particular application. The hardware may include a general purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or alternatively, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices as well as heterogeneous combinations of processors processor architectures, or combinations of different hardware and software, or any other machine capable of executing program instructions.

Thus, in one aspect, each method described above and combinations thereof may be embodied in computer executable code that, when executing on one or more computing devices performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

Obviously, many modifications and variations of the present invention are possible in light of the above teachings and may be practiced otherwise than as specifically described while within the scope of the appended claims.

## Claims

1. A LIDAR apparatus (20) comprising:
a laser source (22) generating a first beam (24) of laser light;
an imaging device (28) having a field of view (30) and generating an image signal (32) representing an object (36) within the field of view;
an object detection module (40) in communication with the imaging device to receive the image signal therefrom and to determine if the object is a protected object (36') matching the characteristics of an object susceptible to vision impairment from exposure to laser light; and
wherein the LIDAR apparatus (20) is configured to reduce the intensity of the laser light directed toward the protected object (36').

2. The LIDAR apparatus (20) as set forth in Claim 1, further including:
a laser intensity module (42) in communication with the laser source (22) and with the object detection module (40) and configured to vary the intensity of the laser light produced by the laser source to reduce the intensity of the laser light directed toward the protected object (36').

3. The LIDAR apparatus (20) as set forth in Claim 1, further including:
a spatial light modulator (SLM) (44) configured to modulate the first beam (24) to project a second beam (25) having a pattern of points (26);
an SLM control module (46) in communication with the object detection module (40) and configured to vary the intensity of the laser light by generating the pattern of points with one or more low intensity regions (48) of the pattern of points (26) directed toward the protected object (36').

4. The LIDAR apparatus (20) as set forth in any preceding claim, wherein the object detection module (40) is configured to determine a vision damage risk associated with the protected object (36') based upon one or more of a type of the protected object, a distance to the protected object, or an orientation of the protected object; and
wherein the LIDAR apparatus (20) is configured to reduce the intensity of the laser light toward the protected object (36') by an amount corresponding to the vision damage risk of the protected object.

5. The LIDAR apparatus (20) as set forth in any preceding claim, wherein the laser light is projected from the LIDAR apparatus as a pattern of points (26) of relatively high intensity separated from one another by regions of relatively low intensity.

6. The LIDAR apparatus (20) as set forth in Claim 5, wherein the object detection module (40) uses a location of one or more of the points of relatively high intensity and amplitude thereof relative to adjacent regions within the image signal (32) in detecting the position and distance of the object (36).

7. A LIDAR apparatus (20) comprising:
a laser source (22) generating a first beam (24) of laser light;
an imaging device (28) generating an image signal (32) representing an object (36);
the laser light being projected upon the object as a pattern of points (26);
an object detection module (40) in communication with the imaging device to process the image signal;
the pattern of points projected upon the object having a reduced intensity in response to the object detection module determining that the object is a protected object (36') matching the characteristics of an object susceptible to vision impairment from exposure to laser light.

8. The LIDAR apparatus (20) as set forth in Claim 7, further including:
a laser intensity module (42) in communication with the laser source (22) and with the object detection module (40) and configured to vary the intensity of the laser light produced by the laser source to reduce the intensity of the laser light directed toward the protected object (36').

9. The LIDAR apparatus (20) as set forth in Claim 7, further including:
a spatial light modulator (SLM) (44) configured to modulate the first beam (24) to project a second beam (25) having the pattern of points (26);
an SLM control module (46) in communication with the object detection module (40) and configured to vary the intensity of the laser light by generating the pattern of points with one or more low intensity regions (48) of the pattern of points directed toward the protected object (36'), and to communicate the pattern of points (26) to the spatial light modulator (44).

10. A method for operating a LIDAR apparatus (20) comprising:
generating a first beam (24) of laser light by a laser source (22);
generating by an imaging device (28), an image signal (32) of an image of an object (36) within a field of view (30);
identifying, by an object detection module (40), the object as a protected object (36') susceptible to vision impairment from exposure to laser light; and
reducing the intensity of the laser light projected toward the protected object (36').

11. The method for operating a LIDAR apparatus (20) as set forth in Claim 10, wherein the step of identifying the object as a protected object (36') includes identifying, by the object detection module (40), the object as a person or as an occupied vehicle.

12. The method for operating a LIDAR apparatus (20) as set forth in Claim 10 or Claim 11, further including:
generating an intensity control signal (43) by a laser intensity module (42);
transmitting the intensity control signal from the laser intensity module to the laser source (22); and
varying the intensity of the laser light produced by the laser source in response to the intensity control signal.

13. The method for operating a LIDAR apparatus (20) as set forth in Claim 10 or Claim 11, further including:
modulating the first beam (24) of laser light by a spatial light modulator (SLM) (44) as a second beam (25) having a pattern of points (26);
communicating by the object detection module (40) information regarding the protected object (36') to a spatial light modulator (SLM) control module (46); and
transmitting an intensity control signal (43) from the SLM control module to the spatial light modulator (44).

14. The method for operating a LIDAR apparatus (20) as set forth in Claim 13, further including generating the pattern of points (26) by the SLM control module (46).

15. The method for operating a LIDAR apparatus (20) as set forth in any one of Claims 10 to 14, further including:
determining by the object detection module (40) a vision damage risk associated with the protected object (36') based upon one or more of a type of the protected object, a distance to the protected object, or an orientation of the protected object; and
reducing the intensity of the laser light directed toward the protected object (36') by an amount corresponding to the vision damage risk of the protected object.
